# EUROPEAN PATENT SPECIFICATION

(11) **EP 0 949 686 B1**
(45) Date of publication and mention of the grant of the patent: **05.03.2003**
(21) Application number: 99201117.1
(22) Date of filing: 07.04.1999
(51) Int. Cl.: H01L 31/042, E04D 13/18

(54) **Device for supporting a solar panel on a slanting roof**
Stützvorrichtung für ein Solarpaneel auf Schrägdächern
Dispositif pour supporter un panneau solaire sur des toits inclinés

(30) Priority: 08.04.1998 NL 1008846
(43) Date of publication of application: 13.10.1999
(73) Proprietor: Econcern BV, 3526 KL Utrecht (NL)
(72) Inventor: Schaap, Antonius Bernardus, 1222 LN Hilversum (NL); Lepelaar, Mark, 2561 SM Den Haag (NL)
(74) Representative: Kupecz, A., Drs. c.s.

(56) References cited:
- EP-A- 0 828 035
- CH-A- 684 202
- DE-A- 4 408 508
- DE-C- 19 612 490

## Description

The present invention relates to a device for supporting a solar panel on a slanting roof, which device also functions substantially as a roof tile, the device comprising a support profile for supporting a solar panel thereupon and a peripheral profile part extending outwardly from the support profile, wherein the peripheral profile part takes a form such that it can cooperate with one or more roof elements such as roof tiles when the device is mounted on a slanting roof.

Such a device is known from US 4,204,532. The device comprises a shell having a generally flat rectangular base and an upstanding edge about the periphery of the shell to receive and hold a solar energy collector. The shell is surrounded by a frame adapted to the shape of roof sheeting. The outer frame has a profile that imitates the form of often used roof tiles. Between the outer edge of the outer frame and the upstanding edge of the shell, a drainage channel is visible, allowing rain water to flow away.

The object according to the present invention is to provide a device which does not require a high degree of location precision and skill to arrange the device in an effective manner on a slanting roof.

To this end, the device according to the present invention is characterised in that said peripheral profile comprises side flaps, each side flap containing drainage channels to allow a variation in overlap with a peripheral profile of a second device.

In this way the draining channels make it possible to connect to the draining channels of another device, ensuring modularity (different PV panels, different roof lay-outs etc.) and watertightness.

In preference, the support profile is substantially rigid and raised with respect to the peripheral profile, and in that the peripheral profile is substantially flexible with respect to the support profile.

In this way, the device can also function as roof tile, i.e. the device can be arranged between the other normal roof tiles on a slanting roof, while a solar panel is arranged thereon, whereby the solar panel is distanced from the surrounding roof tiles because of the elevated support profile, whereby rainfall flows around or under the profile, whereby the solar panel is less susceptible to damage due to precipitation and movement of surrounding roof tiles.

Further details and features of the device are stated in claims 3-7.

According to a second aspect of the present invention there is provided an assembly for arrangement thereof on a roof, which assembly functions substantially as a roof tile, comprising a device for supporting a solar panel and a solar panel arranged thereon.

The present invention will now be further elucidated in the following description wherein reference is made to the figures, in which:
- figure 1 shows a top view of the device according to the present invention,
- figure 2 is a perspective, partly cut-away view of an assembly of the present invention,
- figure 3 is a perspective, partly cut-away view of an assembly of figure 2 when arranged on a slanting roof, and
- figure 4 shows a perspective, partly cut-away view of the peripheral profile of the device when it co-acts with other roof tiles on a slanting roof.

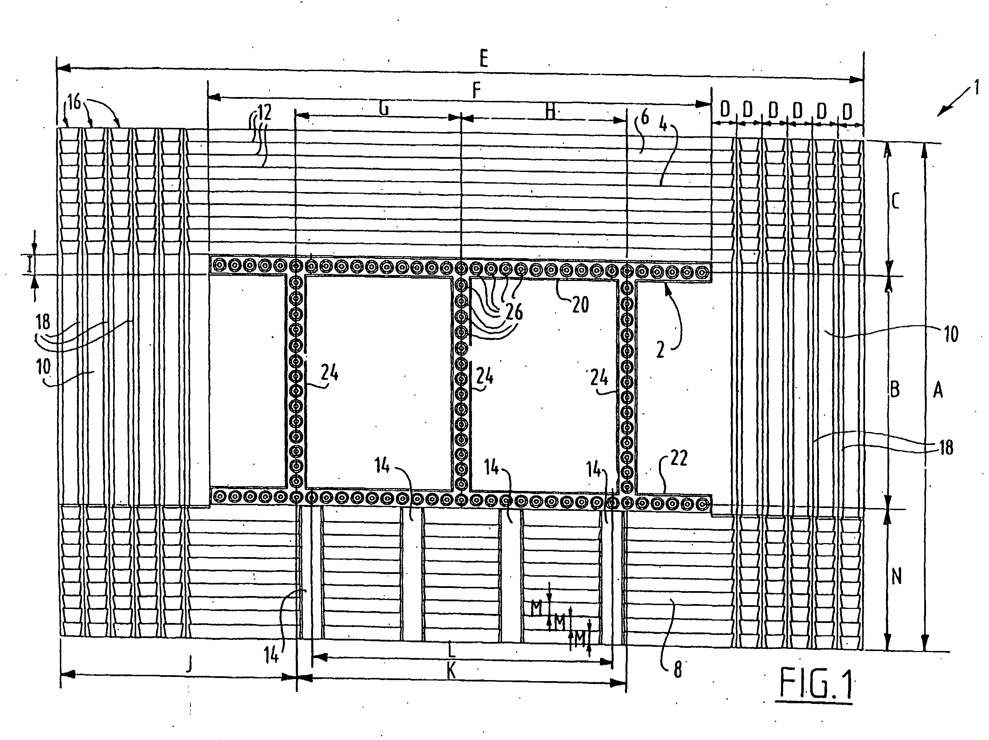

A device 1 (figure 1) comprises a rigid H-shaped support profile 2 for supporting a solar panel and a flexible peripheral profile 4. Rigid profile 2 and peripheral profile 4 are preferably integral and are most preferably formed in one step from recycled high-density polyethylene, which entails lower cost and provides an environmentally-friendly device.

Peripheral profile 4 has an upper flap 6, a lower flap 8 and two side flaps 10.

Upper and lower flaps 6 respectively 8 are provided with a number of saw tooth profiles 12. Lower flap 8 is also provided with four ventilation channels 14 extending transversely over lower flap 8 and support profile 2.

Side flaps 10 are provided on the outer ends with five rows of drainage channels 16 which have a substantially V-shaped profile (not shown).

These drainage channels 16 are separated by raised channels 18 which extend along the side flaps 10 between these channels 16.

Support profile 2 consists of an upper rib 20, a lower rib 22 and three cross ribs 24 extending therebetween.

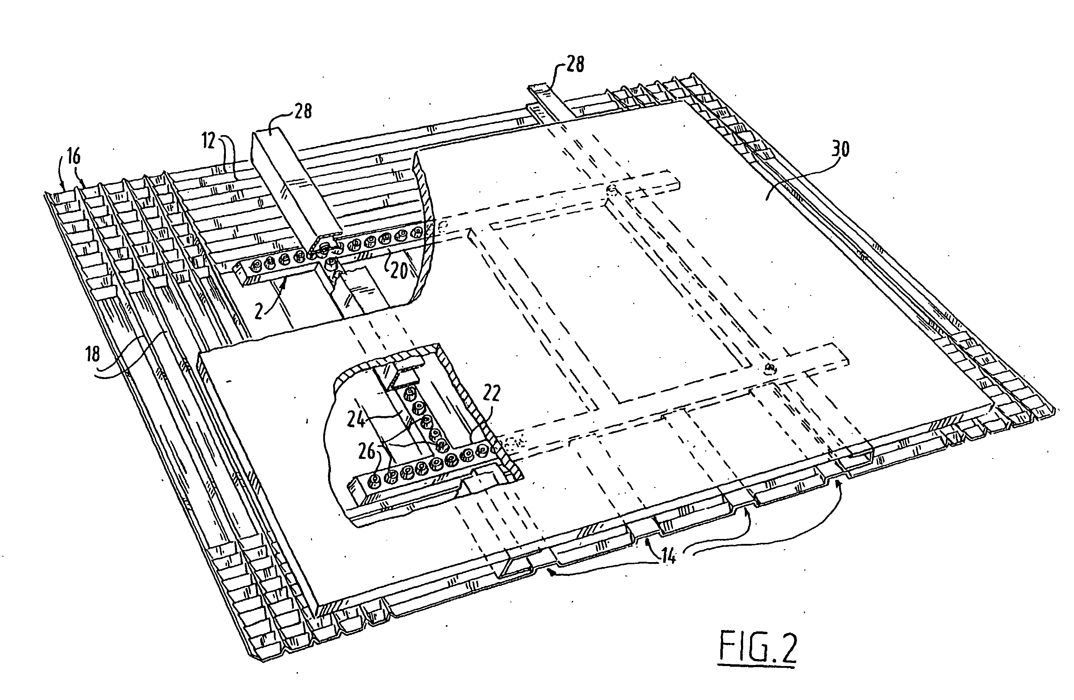

A number of studs extend from the top surfaces of ribs 20-24 (see also figure 2).

Two elongate U-shaped profiles 28 (figure 2) are fixed to the outer side of cross ribs 24 by means of for instance screws on both upper rib 20 and lower rib 22.

A solar panel 30 is arranged on these two U-shaped profiles 28.

Device 1 can be arranged on a slanting roof as a roof tile and can thus be arranged in place by roof-tilers instead of solar panel specialists.

During use the rigid support profile 2 is mounted on the underlying tile battens by means of inserting a predetermined number of screws through studs 26 and into the underlying tile battens. Rigid profile 2 has a plurality of studs 26 since the position of the underlying tile battens is often variable and unknown, whereby a plurality of studs 26 provides the device with a high degree of flexibility in respect of mounting.

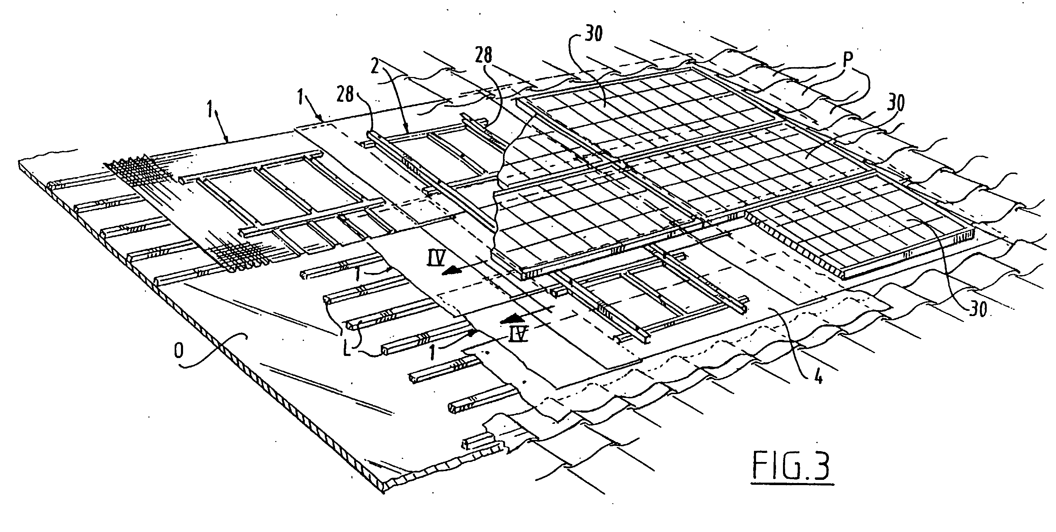

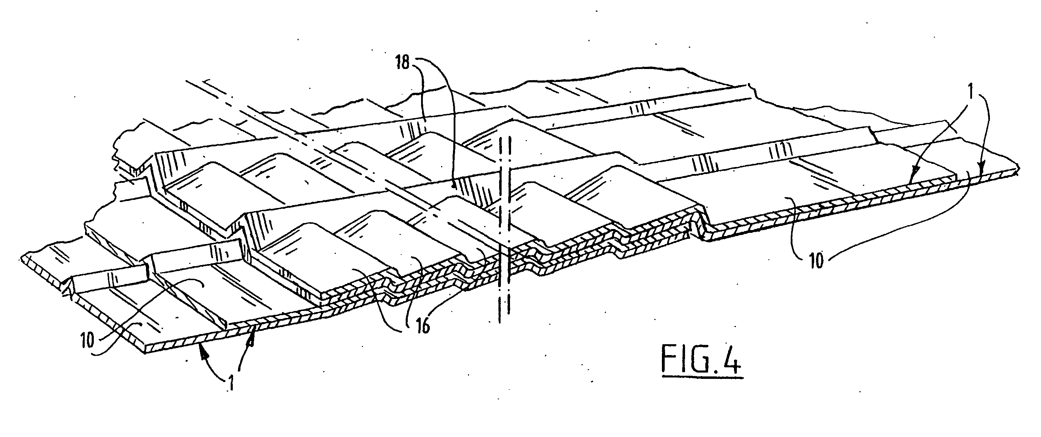

These studs 26 extend from rigid profile 2 (see figure 2) so that in the case of extreme rainfall rainwater runs through between these protrusions and flows away from the device. The flexible peripheral profile 4 is fixed to the underlying roof at locations where it overlaps other roof tiles and co-acts therewith (see figures 3 and 4). This can be carried out in simple manner by fixedly screwing flexible profile 4 at the desired position.

Figure 3 shows the manner in which a number of solar panels can be arranged on a slanting roof using the device according to the present invention. It will be apparent that the peripheral profile can be coupled in simple manner to other roof tiles. In this way a sturdy, watertight solar panel assembly is provided whereby, if desired, the whole outer surface of a slanting roof can be covered with these solar panels.

Preferred dimensions of the device of figure 1 are given below.

| | |
|---|---|
| A = 1000 mm | H = 330 mm |
| B = 455 mm | I - 40 mm |
| C = 270 mm | J = 470 mm |
| D = 50 mm | K = 660 mm |
| E = 1600 mm | L = 600 mm |
| F = 1000 mm | M = 25 mm |
| G = 330 mm | N = 275 mm |

in view of the many fixing methods and the many possibilities of variation in overlap, and therefore the modulating dimension, it is necessary to make as many fixing points as possible (the points where screws pass through the device into the tile batten or counterbatten). This provides the space to fix four screws in appropriate manner in tile batten or counterbattens. In order to realize this the dimensioning of the device is such that in the most commonly occurring cases a minimum of two tile battens or counterbattens will be situated below the device.

In order to effect a watertight connection onto the roof tiles and slates the so-called "concealed gutter" principle is generally applied. In the slanting roof device the drainage channels, the "concealed gutters", are constructed such that they also connect onto "concealed gutters" of other systems (roof lights, solar collectors), can be vacuum formed and can be laid over one another to enable connection of a plurality of slanting roof elements. There are five "concealed gutters" 16 arranged in order to ensure the modularity (different PV panels, different roof lay-outs etc.) in all cases.

Vertical positioning of the devices relative to one another is provided by the saw tooth profiling 12. The saw tooth also reduces accumulation of water in strong wind.

In the integration concepts of PV in slanting roofs applied heretofore aluminium profile systems are used. The PV panel herein forms part of the watertight layer. Mounting of the PV panel on the roof between the roof tiles, roof lights, solar collectors and the like must take place very precisely in order to realize the watertightness. This precision and the number of components required entail high costs.

The device is laid as roof tiles and this can therefore be carried out by roof-tilers. The water-repelling layer is formed by the device. A proper ventilation is provided under this water-repelling layer through air channels 14. When the roof is completed, the device can no longer be seen. The solar panels appear as it were to be suspended above the roof. Inverters which are sometimes mounted under the solar panels are hereby cooled optimally. The device is integrated into the roof between the tiles. On the "gutter side" of the roof the connection onto the usually curved shape of the roof tiles is provided by a counter flashing L (figure 3). This is mounted under the device on two counterbattens and placed on the roof tiles on the underside of the slanting roof element.

With the present invention little precision is required to make the roof watertight. This in combination with a simple production method, vacuum forming of recycled HDPE, results in a greatly reduced cost price. Mounting of solar panels with the slanting roof element becomes so simple that a handy consumer can even do it himself non-professionally. Transport costs are also low because the slanting roof element is light in weight.

The invention is not limited to the foregoing description, the rights sought being defined by the following claims.

## Claims

1. Device (1) for supporting a solar panel (30) on a slanting roof, which device (1) also functions substantially as a roof tile, the device (1) comprising a support profile (2) for supporting a solar panel thereupon and a peripheral profile part (4) extending outwardly from the support profile (2), wherein the peripheral profile part (4) takes a form such that it can cooperate with one or more roof elements such as roof tiles when the device is mounted on a slanting roof, **characterised in that** said peripheral profile (4) comprises side flaps (10), each side flap (10) containing drainage channels (16) to allow a variation in overlap with a peripheral profile (4) of a second device (1).

2. Device as claimed in claim 1, wherein the support profile (2) is substantially rigid with respect to the peripheral profile (4), and in that the peripheral profile (4) is substantially flexible with respect to the support profile (2).

3. Device as claimed in claim 1 or 2, wherein the support profile (2) and the peripheral profile (4) are vacuum formed from recycled high-density polyethylene.

4. Device as claimed in any of the preceding claims, wherein the support profile (2) is raised relative to the peripheral profile (4).

5. Device as claimed in claim 4, wherein the support profile (2) is H-shaped and provided with a plurality of stud-like protrusions (26).

6. Device as claimed in claim 5, wherein the peripheral profile (4) comprises one or more ventilation channels (14).

7. Device as claimed in any of the preceding claims, wherein the peripheral profile (4) comprises one or more roof element coupling profiles (12, 16) for coupling to the roof elements when the device (1) is placed on a slanting roof.

8. Assembly for arrangement thereof on a roof, which assembly functions substantially as a roof tile, comprising a device (1) for supporting a solar panel (30) as claimed in any of the foregoing claims and a solar panel (30) arranged thereon.

9. Assembly as claimed in claim 8, further comprising fixing means (28) for fixing the solar (30) panel to the device (1), which fixing means (28) preferably comprise one or more elongate U-shaped profiles, which U-shaped profiles are arranged between the solar panel (30) and the device (1).

## Patentansprüche

1. Vorrichtung (1 zum Tragen eines Solarpaneels (30) auf einem schiefen Dach, welche Vorrichtung (1) auch im Wesentlichen als eine Dachbelagplatte dient, wobei die Vorrichtung (1) aufweist ein Trageprofil (2) zum Tragen eines Solarpaneels darauf und ein Umfangsprofilteil (4), welches von dem Trageprofil (2) nach außen absteht, wobei das Umfangsprofilteil (4) eine Form annimmt derart, dass es mit einem oder mehr Dachelementen als Dachbelagplatte zusammenwirken kann, wenn die Vorrichtung auf einem schiefen Dach montiert ist, **dadurch gekennzeichnet, dass** das Umfangsprofil (4) Seitenplanken (10) aufweist, wobei jede Seitenplanke (10) Drainagekanäle (16) enthält, um eine Variation des Überlapps mit einem Umgebungsprofil (4) einer zweiten Vorrichtung (1) zu ermöglichen.

2. Vorrichtung gemäß Anspruch 1, bei welcher das Trageprofil (2) im Wesentlichen starr bezüglich des Umfangsprofils (4) ist und bei welcher das Umfangsprofil (4) im Wesentlichen flexibel bezüglich des Trageprofils (2) ist.

3. Vorrichtung gemäß Anspruch 1 oder 2, bei welcher das Trageprofil (2) und das Umfangsprofil (4) aus wiederverwertetem hochdichtem Polyethylen vakuumgeformt sind.

4. Vorrichtung gemäß einem der vorangehenden Ansprüche, bei welcher das Trageprofil (2) relativ zu dem Umfangsprofil (4) erhöht ist.

5. Vorrichtung gemäß Anspruch 4, bei welcher das Trageprofil (2) H-förmig ist und mit einer Mehrzahl von pfostenartigen Vorsprüngen (26) vorgesehen ist.

6. Vorrichtung gemäß Anspruch 5, bei welcher das Umfangsprofil (4) einen oder mehr Belüftungskanäle (14) aufweist.

7. Vorrichtung gemäß einem der vorangehenden Ansprüche, bei welcher das Umfangsprofil (4) ein oder mehr Dachelement-Koppelprofile (12, 16) zum Koppeln der Dachelemente aufweist, wenn die Vorrichtung (1) auf einem schiefen Dach angebracht ist.

8. Aufbau zu dessen Anordnung auf einem Dach, welcher Aufbau im Wesentlichen als eine Dachbelagplatte dient und welcher eine Vorrichtung (1) zum Tragen eines Solarpaneels (30) gemäß einem der vorangehenden Ansprüche und ein darauf angeordnetes Solarpaneel (30) aufweist.

9. Aufbau gemäß Anspruch 8, welcher ferner Befestigungsmittel (28) zum Befestigen des Solarpaneels (30) an der Vorrichtung (1) aufweist, welche Befestigungsmittel (28) vorzugsweise ein oder mehr verlängerte U-förmige Profile aufweisen, welche U-förmigen Profile zwischen dem Solarpaneel (30) und der Vorrichtung (1) angeordnet sind.

## Revendications

1. Dispositif pour supporter un panneau solaire (30) sur un toit incliné, lequel dispositif (1) agit également essentiellement à la manière d'une tuile de toit, le dispositif (1) comprenant un profilé de support (2) servant à supporter un panneau solaire, et une partie profilée périphérique (4) s'étendant extérieurement par rapport au profilé de support (2), la partie profilée périphérique (4) ayant une forme telle qu'elle peut coopérer avec un ou plusieurs éléments du toit, comme par exemple des tuiles du toit, lorsque le dispositif est monté sur un toit incliné, **caractérisé en ce que** ledit profilé périphérique (4) comprend des rabats latéraux (10), chaque rabat latéral (10) contenant des canaux de drainage (16) permettant une variation du chevauchement avec un profilé périphérique (4) et un second dispositif (1).

2. Dispositif selon la revendication 1, dans lequel le profil de support (2) est essentiellement rigide par rapport au profilé périphérique (4) et en ce que le profilé périphérique est essentiellement flexible par rapport au profilé de support (2).

3. Dispositif selon la revendication 1 ou 2, dans lequel le profilé de support (2) et le profilé périphérique (4) sont formés sous vide à partir de polyéthylène haute densité recyclé.

4. Dispositif selon l'une quelconque des revendications précédentes, dans lequel le profilé de support (2) est surélevé par rapport au profilé périphérique (4).

5. Dispositif selon la revendication 4, dans lequel le profilé de support (2) est en forme de H et est pourvu d'une pluralité de parties saillantes en forme de tiges (26).

6. Dispositif selon la revendication 5, dans lequel le profilé périphérique (4) comprend un ou plusieurs canaux de ventilation (14).

7. Dispositif selon l'une quelconque des revendications précédentes, dans lequel le profilé périphérique (4) comprend un ou plusieurs profilés (12, 16) de couplage d'éléments de toit servant à coupler les éléments de toit lorsque le dispositif (1) est placé sur un toit incliné.

8. Ensemble destiné à être disposé sur un toit, lequel ensemble agit essentiellement en tant que tuile d'un toit, comprenant un dispositif (1) pour supporter un panneau solaire (30) selon l'une quelconque des revendications précédentes et un panneau solaire (3) disposé sur ce dispositif.

9. Ensemble selon la revendication 8, comprenant en outre des moyens de fixation (28) pour fixer le panneau solaire (30) au dispositif (1), lesquels moyens de fixation (28) comprennent de préférence un ou plusieurs profilés allongés en forme de U, lesquels profilés en forme de U étant disposés entre le panneau solaire (30) et le dispositif (1).
